Europäisches Patentamt

European Patent Office

Office européen des brevets

(11) Numéro de publication: **0 270 430 B1**

(12) **FASCICULE DE BREVET EUROPEEN**

(45) Date de publication de fascicule du brevet:
**02.01.92**

(51) Int. Cl.⁵: **F16H 7/00**, F16H 19/00

(21) Numéro de dépôt: **87402568.7**

(22) Date de dépôt: **13.11.87**

Le dossier contient des informations techniques présentées postérieurement au dépôt de la demande et ne figurant pas dans le présent fascicule.

(54) **Dispositif de transformation de mouvement, en particulier réducteur de vitesse.**

(30) Priorité: **24.11.86 FR 8616328**
**23.01.87 FR 8700792**
**16.03.87 FR 8703574**
**10.04.87 FR 8705155**

(43) Date de publication de la demande:
**08.06.88 Bulletin 88/23**

(45) Mention de la délivrance du brevet:
**02.01.92 Bulletin 92/01**

(84) Etats contractants désignés:
**AT BE CH DE ES FR GB GR IT LI LU NL SE**

(56) Documents cités:
**DE-A- 2 513 004      FR-A- 2 382 630**
**GB-A- 632 380      GB-A- 2 004 346**
**US-A- 2 571 427      US-A- 2 859 629**

(73) Titulaire: **Salesse, Christian**
**30, rue Jules Auffret**
**F-93330 Neuilly-sur-Marne(FR)**

(72) Inventeur: **Salesse, Christian**
**30, rue Jules Auffret**
**F-93330 Neuilly-sur-Marne(FR)**

(74) Mandataire: **Netter, André et al**
**Cabinet NETTER, 40, rue Vignon**
**F-75009 Paris(FR)**

## Description

L'invention concerne un dispositif de transformation de mouvement pouvant constituer notamment un réducteur de vitesse.

On connaît des dispositifs destinés à transformer un premier mouvement de rotation en un second mouvement qui est le plus souvent un autre mouvement de rotation, mais qui peut être aussi un mouvement rectiligne.

Dans le cas où les deux mouvements sont des mouvements de rotation, le dispositif comprend deux axes autour desquels s'effectuent respectivement les deux dits mouvements de rotation, le dispositif étant opératoire pour modifier le rapport des vitesses angulaires respectives des rotations.

Le plus souvent, dans un tel dispositif, les deux axes de rotation sont dans le prolongement l'un de l'autre. Le réducteur de vitesse peut alors être monté directement sur l'arbre de sortie d'un moteur, cet arbre de sortie matérialisant alors l'axe à vitesse rapide. L'axe à vitesse lente est alors dans le prolongement de l'axe ou arbre du moteur.

Ces dispositifs connus sont le plus souvent réversibles, c'est-à-dire qu'ils peuvent être utilisés aussi comme multiplicateurs de vitesse.

Ils trouvent de nombreuses utilisations, par exemple en robotique, pour la commande de machines-outils, etc... où ils sont généralement utilisés comme réducteurs.

Parmi les différents types de dispositifs de transformation de mouvement de ce genre, on peut citer, par exemple, des dispositifs à trains d'engrenages, notamment de type épicycloïdal, ou encore des dispositifs prévoyant un entraînement par excentrique.

Ces dispositifs connus ont notamment pour inconvénient d'introduire du jeu et d'être ainsi difficilement utilisables en mécanique de précision.

On connaît également des dispositifs comprenant un roulement elliptique dans lesquels une couronne flexible à denture extérieure est déformée, cette dernière entraînant une couronne rigide à denture intérieure. De tels dispositifs introduisent une certaine élasticité qui est préjudiciable au bon fonctionnement et ils peuvent provoquer des altérations de mouvement, notamment s'il y a des variations de couple importantes.

Enfin, tous ces dispositifs ont pour inconvénients communs de ne fonctionner qu'avec une vitesse d'entrée relativement faible, de provoquer des frottements qui abaissent le rendement et en outre de faire appel à un lubrifiant. Ils ont encore comme inconvénient supplémentaire d'introduire de l'inertie sur l'axe à vitesse rapide.

Par ailleurs, on connaît, d'après le document GB-A-2 004 346 comme défini dans le préambule de la revendication 1, un dispositif de transformation de mouvement, en particulier un réducteur de vitesse, comportant un premier étage comprenant deux poulies coaxiales, dont l'une au moins est mobile et couplée fonctionnellement à un axe engendrant un premier mouvement de rotation, qui est rapide ; un second étage comprenant au moins un ensemble de deux poulies liées en rotation et coopérant respectivement avec des moyens de transmission qui coopèrent avec les poulies du premier étage ; et un support mobile qui supporte à rotation libre le(s) ensemble(s) de deux poulies du second étage, et dont le déplacement sur une trajectoire imposée engendre un second mouvement de rotation, qui est lent.

Dans le document précité, le premier mouvement est un mouvement d'entrée et le second mouvement est un mouvement de sortie, le dispositif constituant ainsi un réducteur de vitesse.

Ce dispositif connu réalise une réduction de vitesse en faisant une multiplication de vitesse qui est suivie par une réduction de vitesse. Il en résulte que les couples de rotation générés sur le support mobile sont en opposition. De ce fait, ceci diminue le rapport de réduction, diminue le rendement, augmente le frottement et les inerties sur le mouvement rapide, et augmente aussi l'encombrement global du dispositif.

On connaît d'autre part, d'après le document FR-A-2 382 630 comme défini dans le préambule de la revendication 7, un dispositif de transformation de mouvement, en particulier réducteur de vitesse, comportant un premier étage comprenant deux organes mobiles constitués par des brins d'entraînement sans fin, dont l'un au moins est couplé fonctionnellement à un axe engendrant un premier mouvement qui est un mouvement de rotation rapide ; un second étage comprenant au moins un ensemble de deux poulies liées en rotation et coopérant respectivement avec les deux brins d'entraînement sans fin ; et un support mobile qui supporte à rotation libre le(s) ensemble(s) de poulies du second étage, et dont le déplacement sur une trajectoire imposée engendre un second mouvement qui est un mouvement lent et linéaire.

Le dispositif du document FR-A-2 382 630 s'apparente à celui du document GB-A-2 004 346. Toutefois, le premier mouvement est un mouvement d'entrée, tandis que le second mouvement est un mouvement de sortie, celui-ci constituant un mouvement de translation.

Le dispositif du document FR-A-2 382 630 présente sensiblement les mêmes inconvénients que celui du document GB-A-2 004 346 en ce sens que les efforts qui produisent le mouvement de sortie sont en opposition.

C'est un but de l'invention de procurer un tel dispositif de transformation de mouvement qui peut être utilisé en particulier comme réducteur de vitesse et qui permet la transformation d'un mouvement de rotation en un autre mouvement de rotation, ou bien en un mouvement de déplacement suivant une trajectoire courbe non circulaire, plane ou non plane, et inversement.

Sous un premier aspect, comme décrit dans la revendication 1, l'invention concerne un dispositif de transformation de mouvement du genre défini au document GB-A-2 004 346.

Ce dispositif se caractérise essentiellement par le fait que les moyens de transmission possèdent respectivement un entraînement direct et un entraînement inversé de sorte que les deux poulies du premier étage se déplacent en rotation à des vitesses en sens opposés, dont l'une peut être nulle, et que ces deux poulies génèrent sur le support mobile des couples de rotation de même sens.

Il en résulte que c'est la somme des couples de rotation qui provoque le déplacement du support mobile, ce qui permet d'éliminer les inconvénients mentionnés précédemment.

Avantageusement, les moyens de transmission sont des brins d'entraînement sans fin qui coopèrent chacun avec une poulie du premier étage et une poulie du ou (des) ensemble(s) de poulies du second étage, le premier mouvement de rotation et le second mouvement de rotation étant coaxiaux.

Dans une variante de réalisation, l'un au moins des moyens de transmission est constitué par des engrenages ou des roues à friction, ce moyen de transmission coopérant avec l'une des deux poulies du premier étage et ce moyen de transmission étant à denture ou à contact externe, soit à denture ou à contact interne.

Sous un autre aspect, l'invention concerne un dispositif tel que défini précédemment, lequel constitue un premier dispositif différentiel comportant deux poulies de premier étage, au moins un ensemble de poulies de second étage et un support mobile, ce premier dispositif différentiel étant relié à un second dispositif différentiel, en soi connu, comportant au moins un organe solaire, un porte-satellite(s) et au moins un satellite, ce qui permet de constituer un réducteur bi-différentiel.

Dans ce cas, l'une des poulies du premier étage du premier dispositif différentiel est bloquée en rotation et est commune avec un organe, par exemple un organe solaire, du second dispositif différentiel ; le support mobile du premier dispositif différentiel est commun avec le porte-satellite(s) du second dispositif différentiel ; le(s) ensemble(s) de poulies du second étage du premier dispositif différentiel est (sont) commun(s) avec le(s) satellite(s) du second dispositif différentiel.

Dans ce cas, l'autre poulie du premier étage du premier dispositif différentiel constitue le mouvement de rotation rapide, tandis qu'un organe non bloqué, par exemple un autre organe solaire, du second dispositif différentiel constitue le mouvement de rotation lent.

Ce deuxième dispositif différentiel, d'un type en soi connu, peut utiliser des transmissions par pignons, par courroies ou par tout autre moyen. Il peut aussi utiliser plusieurs de ces moyens connus sur un même équipement.

On obtient alors, conformément à l'invention, un réducteur de type bi-différentiel.

Avantageusement, les poulies du premier étage sont reliées aux poulies du second étage par des brins d'entraînement sans fin constitués par des courroies crantées, l'une au moins des courroies crantées étant avantageusement à crantage double face, les poulies du premier étage et les poulies du second étage étant des roues dentées et la courroie crantée s'enroulant également autour de poulies de renvoi constituées par des roues dentées.

Sous un autre aspect, l'invention concerne un dispositif de transformation de mouvement, en particulier réducteur de vitesse, comme décrit à la revendication 7, du type connu par le document FR-A-2 382 630.

Ce dispositif est caractérisé en ce que les brins d'entraînement sans fin constituant les organes mobiles du premier étage possèdent respectivement un entraînement direct et un entraînement inversé de sorte que ces deux organes se déplacent à des vitesses en sens opposés, dont l'une peut être nulle, et que ces deux organes génèrent sur le support mobile des efforts de même sens.

Ce dispositif permet d'éviter les inconvénients mentionnés précédemment.

Avantageusement, les deux brins d'entraînement sans fin ont des portions parallèles et coplanaires et l'un au moins des brins est couplé à un axe engendrant le premier mouvement, tandis que le second mouvement engendré par le support mobile est un mouvement de déplacement à course limitée sur une trajectoire non fermée, par exemple sur une trajectoire rectiligne.

Ainsi, le support mobile peut être constitué par un chariot déplaçable sur une voie de guidage ou un gabarit, ce chariot supportant le ou les ensembles des poulies du second étage.

Dans le cas où le dispositif comprend des brins d'entraînement sans fin, il peut s'agir, par exemple, de brins souples comme des courroies crantées, des courroies plates, des courroies à section en V, des câbles, des cordes, des feuillards, etc..., ou encore des brins articulés comme des chaînes.

Dans la description qui suit, donnée uniquement à titre d'exemple, on se réfère aux dessins annexés, sur lesquels :

- la figure 1 représente une vue en coupe partielle d'un dispositif de transformation de mouvement selon l'invention ;

- la figure 2 est une vue en élévation montrant les différentes poulies et brins d'entraînement du dispositif de la figure 1 ;
- la figure 3 est une vue de dessus d'un autre dispositif de transformation de mouvement selon l'invention ;
- la figure 4 est une vue de côté correspondante ; et
- la figure 5 est est une représentation schématique d'un autre dispositif de transformation de mouvement selon l'invention constituant un réducteur "bi-différentiel".

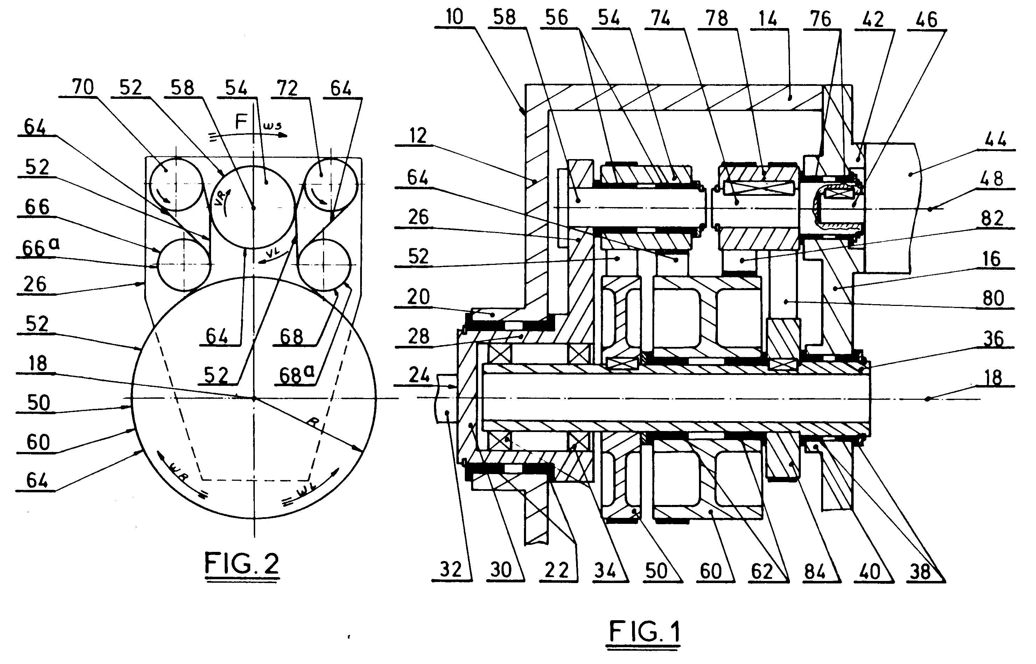

On se réfère tout d'abord au dispositif représenté aux figures 1 et 2. Ce dispositif comprend un boîtier de forme générale cylindrique en deux parties, à savoir une partie 10 formée d'une paroi plane 12 et d'une paroi cylindrique 14 et une partie 16 formée d'une paroi plane dont le bord périphérique peut être solidarisé à la paroi cylindrique 14 par tout moyen approprié. L'ensemble du boîtier présente une forme cylindrique de révolution autour d'un axe 18. La paroi annulaire 12 comporte un prolongement cylindrique 20, centré sur l'axe 18 et muni intérieurement de roulements 22 coopérant avec un moyeu 24 dont dépend un bras 26 propre à se déplacer en rotation à l'intérieur du boîtier et autour de l'axe 18. Le moyeu 24 comprend une paroi cylindrique annulaire 28 dont dépend le bras 26 et une paroi d'extrémité 30 dont dépend un arbre 32 d'axe 18.

A l'intérieur du moyeu creux 24 sont disposés des roulements 34 propres à coopérer avec une extrémité d'un arbre creux 36 dont l'autre extrémité coopère avec des roulements 38 disposés à l'intérieur d'un palier cylindrique 40 que ménage la paroi 16. Cette paroi 16 définit en outre un logement généralement cylindrique 42 pour le montage de l'extrémité d'un moteur 44 dans une position décalée par rapport à l'axe 18. Ce moteur 44 comprend un arbre de sortie 46 qui est disposé suivant un axe 48 parallèle à l'axe 18 et qui est destiné à être relié à des moyens d'entraînement associés au dispositif de transformation de mouvement. Dans une variante de réalisation, le moteur 44 pourrait être placé dans une disposition coaxiale à l'axe 18.

Sur l'arbre 36 est calée une poulie 50, dans l'exemple une roue dentée, située à proximité immédiate du bras 26. Un brin sans fin 52, dans l'exemple une courroie crantée, passe autour de la poulie 50 et autour d'une poulie 54 montée folle, par l'intermédiaire de roulements 56, autour d'un pivot 58 porté par l'extrémité libre du bras 26 et s'étendant parallèlement à l'axe 18. Une autre poulie 60, également en forme de roue dentée, de même diamètre que la poulie 50 mais de hauteur sensiblement double, est montée folle autour de l'arbre 36, par l'intermédiaire de roulements 62, dans une position adjacente à celle de la poulie 50. Comme on le verra plus loin, les poulies 50 et 60 sont destinées à être entraînées en rotation à des vitesses différentes, dont l'une peut être nulle, et en sens opposés.

Autour de la poulie 60 passe un brin d'entraînement 64 constitué d'une courroie crantée sur ses deux faces, tandis que la courroie 52 est crantée uniquement sur sa face interne.

En effet, comme le montrent les figures 1 et 2, les courroies 52 et 64 passent respectivement autour de régions périphériques opposées de la poulie 54 qui est une poulie double de hauteur suffisante pour coopérer avec les courroies 52 et 64.

Comme le montre la figure 2, le brin 52 s'enroule sur plus des trois-quarts de la périphérie de la poulie 50 autour d'un galet tendeur 66 monté fou sur le bras 26, passe ensuite autour de la région périphérique externe de la poulie 54, et s'enroule ensuite derrière un autre galet tendeur 68 également porté par le bras 26 avant de regagner à nouveau la périphérie de la poulie 50. Les galets 66 et 68 sont disposés de manière à être pratiquement tangents à la périphérie de la roue 50 afin de diminuer la longueur des brins tendus et par conséquent l'élasticité et d'améliorer aussi l'enroulement du brin 52 sur la poulie 50.

Le brin 64 s'enroule également sur plus des trois quarts de la périphérie de la poulie 60, passe ensuite autour d'un galet tendeur 66a coaxial au galet 66, autour d'un autre galet tendeur 70, également porté par le bras 26, autour de la poulie double 54 mais du côté interne de celle-ci, autour d'un autre galet tendeur 72, également porté par le bras 26 et enfin autour d'un galet tendeur 68a coaxial avec le galet 68 avant de regagner la périphérie de la poulie 60.

Dans l'exemple, la poulie 50 est entraînée à une vitesse angulaire supérieure à celle de la poulie 60 et de sens contraire. Il en résulte que le brin 52 est entraîné à une vitesse linéaire supérieure à celle du brin 64.

Le fait que les brins 52 et 64 coopèrent, sans glissement, avec la même poulie double 54 implique que leurs vitesses linéaires sur cette poulie double sont égales et que c'est le mouvement de rotation du bras 26 qui va réaliser cette égalité de vitesses. Si l'on désigne par :

$V_R$ la vitesse linéaire du brin 52 autour de la poulie 54,

$V_L$ la vitesse linéaire du brin 64 autour de la poulie 54,

$W_R$ la vitesse angulaire de la poulie 50,

$W_L$ la vitesse angulaire de la poulie 60

$W_S$ la vitesse angulaire du bras 26

R le rayon des poulies 50 et 60,

on peut écrire les égalités :

$$V_L = W_L R + W_S R$$
$$V_R = W_R R - W_S R$$
$$V_L = V_R$$

d'où l'on tire :

$$W_S = \frac{W_R - W_L}{2}$$

On obtient ainsi le rapport de réduction du dispositif représenté sur les figures 1 et 2, le sens de rotation du bras 26 étant celui indiqué par la flèche F sur la figure 2. C'est en effet, à partir des vitesses représentées sur la figure 2, à la fois le sens des couples de rotation autour de l'axe 18, que les brins tendus des courroies 52 et 64 appliquent sur le bras 26, et le sens de $W_S$ qui satisfait la loi de vitesse définie ci-dessus.

Ce dispositif fonctionne aussi comme multiplicateur de vitesses: en effet, si on fait tourner le bras 26, les poulies 50 et 60 tournent à des vitesses supérieures.

Par ailleurs, le mouvement secondaire est une vitesse relative, c'est-à-dire que dans le cas de la forme de réalisation selon les figures 1 et 2, le bras 26 étant bloqué, la vitesse $W_S$ se superpose aux vitesses $W_R$ et $W_L$ des poulies 50 et 60. Cette vitesse relative se concrétise rait sous la forme d'un mouvement de rotation continu de la pièce 16 autour de l'axe 18 de la figure 1.

Bien entendu, si on inverse le sens de rotation de chacune des poulies 50 et 60, le bras 26 est alors entraîné en rotation dans un sens opposé à celui de la flèche F.

On comprendra que les poulies 50 et 60 constituent les organes mobiles du premier étage au sens de l'invention, alors que la poulie double 54 constitue l'ensemble de poulies du second étage au sens de l'invention.

Dans l'exemple, les poulies 50 et 60 ont le même diamètre et la poulie 54 est une poulie double de diamètre constant. Dans une variante de réalisation, on pourrait utiliser des poulies 50 et 60 de diamètres différents et deux poulies 54 également de diamètres différents mais liées en rotation.

L'entraînement des poulies 50 et 60 s'effectue par l'intermédiaire de l'arbre 46 du moteur 44 sur lequel est calé un arbre étagé 74 qui coopère avec les roulements 76 à l'intérieur du logement 42. Sur l'extrémité de l'arbre 74 est calée une poulie double 78 autour de laquelle s'enroulent deux courroies : une courroie 80, crantée seulement sur sa face interne, et une courroie 82, crantée sur ses faces interne et externe. La courroie 80 coopère par sa face interne avec la poulie 78 et avec une poulie 84, également en forme de roue dentée, qui est calée sur l'arbre 36, tandis que la courroie 82 coopère, par sa face externe crantée, avec la poulie 60 et, par sa face interne crantée, avec la poulie 78.

On comprendra que, sous l'action du moteur 44 et des moyens d'entraînement décrits précédemment, la roue 60 et la roue 84 sont entraînées à des vitesses de rotation différentes et de sens opposés, la roue 60 étant entraînée à la vitesse angulaire lente $W_L$ et la roue 84 à la vitesse angulaire rapide $W_R$.

Lorsque le moteur 44 est mis en rotation, le bras 26 et par conséquent l'arbre 32 sont entraînés également en rotation à la vitesse angulaire $W_S$, celle-ci étant plus lente que celle du moteur.

En variante, il est possible de bloquer en rotation l'une des deux poulies 50 et 60 et d'entraîner seulement l'autre par l'intermédiaire du moteur. Ainsi, on peut bloquer l'arbre 36 en rotation et supprimer la courroie 80. Dans ce cas, la roue 50 est bloquée en rotation et seule la roue 60 est entraîné par l'intermédiaire du moteur.

Pour que le dispositif des figures 1 et 2 puisse fonctionner, il est indispensable que les poulies 50 et 60 du premier étage soient déplacées à des vitesses respectives telles que le rapport de ces vitesses soit différent du rapport de vitesses obtenu lorsque le bras 26 est bloqué sur sa trajectoire que ces deux organes mobiles se déplacent librement en sens opposé par la rotation des poulies 54. Si tel n'était pas le cas, le bras 26 ne serait pas entraîné en rotation.

La disposition des brins 52 et 64, tels que représentés aux figures 1 et 2, est donnée seulement à titre d'exemple. D'autres dispositions sont possibles à condition de respecter les sens de rotation différents des poulies 50 et 60 et le même sens de rotation de la poulie double 54.

Il est par ailleurs possible de prévoir avec un seul étage de poulies 50 et 60 un dispositif comportant au moins deux bras 26 tournant à des vitesses dont les valeurs et les sens peuvent être différents l'un de l'autre. Ceci est possible par la seule variation des différents diamètres des poulies 54. Il est à noter dans ce cas que les mouvements de ces deux bras 26 sont limités en amplitude.

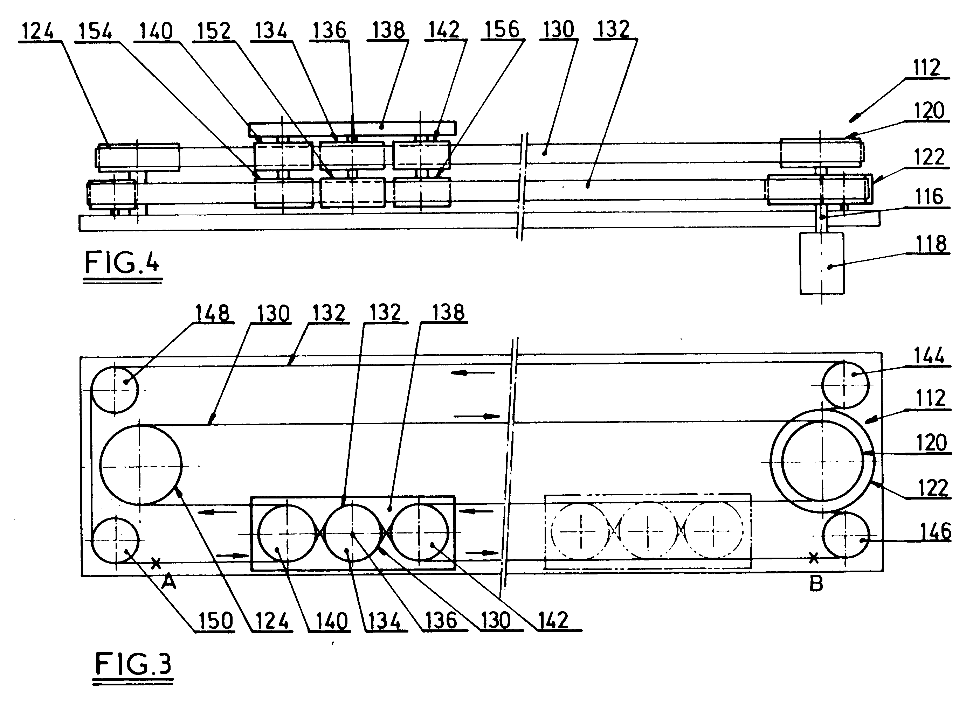

On se réfère maintenant aux figures 3 et 4 qui représentent un dispositif de transformation de mouvement selon une autre forme de réalisation de l'invention. Ce dispositif comprend un ensemble 112 de deux poulies coaxiales couplé à l'axe 116 d'un moteur 118 qui engendre le premier mouvement du dispositif. Dans l'exemple, les poulies 120 et 122 sont de préférence des roues dentées qui coopèrent avec des brins d'entraînement 130 et 132 constitués par des courroies crantées sur une seule face, ces brins d'entraînement constituant les organes mobiles du premier étage au sens de l'invention.

Le brin 130 est un brin sans fin qui passe autour de la poulie 120, autour d'une poulie 124 située à distance de la poulie 120 et autour d'une poulie 134 montée folle sur un axe 136 porté par un chariot 138 constituant un support mobile déplaçable sur une voie de guidage (non représentée) parallèle à la direction générale du brin 130. Cette voie de guidage a une longueur inférieure à l'entraxe qui sépare les poulies 120 et 124. Des galets tendeurs 140 et 142 portés par le chariot 138 sont destinés à permettre l'enroulement du brin autour de la poulie 134, sur sensiblement une demi-circonférence. Les galets 140 et 142 ont sensiblement le même diamètre que la poulie 134 et sont situés respectivement de part et d'autre de celle-ci, les axes des galets 140 et 142 étant parallèles et coplanaires avec l'axe 136.

Le brin 132 passe autour de la poulie 122, mais dans une région opposée à celle où passe le brin 130 autour de la poulie 120. Il en résulte que les brins 130 et 132 sont entraînés à des vitesses linéaires différentes et en sens opposés, comme montré par les flèches sur la figure 3. Des galets 144 et 146 assurent l'enroulement du brin 132 autour de la poulie 122 et des galets tendeurs 148 et 150 assurent l'enroulement du brin 132 dans une région proche de la poulie 124. Le brin 132 passe autour d'une poulie 152 solidaire en rotation de la poulie 134, la poulie 152 étant montée sur l'axe 136 et ayant le même diamètre que la poulie 134. Comme montré sur les figures 3 et 4, le brin 132 passe autour de la poulie 152 dans une région périphérique opposée à celle où passe le brin 130 autour de la poulie 134. L'enroulement du brin 132 autour de la poulie 152 est assuré par des galets tendeurs 154 et 156 respectivement coaxiaux avec les galets 140 et 142.

Dans une variante de réalisation, non représentée, les poulies 120 et 122 de l'ensemble 112 pourraient avoir le même diamètre et les poulies 134 et 152 pourraient avoir des diamètres différents.

Le fonctionnement du dispositif des figures 3 et 4 est le suivant. L'axe 116 étant entraîné en rotation par le moteur 118, il entraîne également en rotation les poulies 120 et 122 et, par conséquent, les brins 130 et 132 qui se déplacent à des vitesses linéaires différentes et en sens opposés. Ils imposent au chariot 138 un déplacement linéaire sur sa voie de guidage. Dans ce mode de réalisation, le moteur ne peut être entraîné en continu, il est entraîné alternativement dans un sens et dans l'autre pour commander le déplacement du chariot 138 respectivement dans un sens et dans l'autre sur sa voie de guidage, et cela sur une course limitée. On peut prévoir, aux extrémités de la voie de guidage, des palpeurs qui, lorsqu'ils sont actionnés, inversent automatiquement le fonctionnement du moteur de manière que le chariot 138 se déplace alors en sens contraire. La vitesse de déplacement du chariot est imposée notamment par la vitesse de rotation du moteur, étant à noter que plus les poulies 120 et 122 ont un diamètre voisin, plus la vitesse de déplacement du chariot est lente. On peut déterminer par le calcul et dans ce cas de figure que la vitesse linéaire du chariot est égale à la moitié de la différence entre la vitesse linéaire des brins 130 et 132.

En outre, il doit être noté que le dispositif des figures 3 et 4 est réversible. Le déplacement du chariot sur sa voie de guidage entraîne l'axe 116 du moteur en rotation.

Dans une variante de réalisation, l'un des brins 130 et 132, par exemple le brin 132, peut être immobilisé de manière que sa vitesse soit nulle. Ceci peut être obtenu simplement en bloquant le brin 132 sur le bâti du dispositif, comme montré par exemple en A et B sur la figure 3. On peut supprimer ainsi la partie fixe du brin 132 comprise entre A et B.

Dans une autre variante la motorisation des brins 130 et 132, au lieu d'être assurée par les poulies 120 et 122, pourrait l'être par l'un au moins des galets tendeurs, par exemple les galets 144 et 146.

Il est à noter que le dispositif des figures 3 et 4 permet, le cas échéant, d'entraîner un autre chariot analogue au chariot 138 par l'intermédiaire des deux autres portions parallèles des brins 130 et 132.

De façon générale, il est possible de monter un ou plusieurs chariots sur les brins aller et les brins retour 130 et 132, ces chariots pouvant se déplacer à des vitesses différentes, voire même avec des sens de marche différents.

Dans tous les modes de réalisation précités, le support mobile déplaçable sur une trajectoire imposée peut constituer directement un organe à mettre en mouvement. Ainsi, le bras du dispositif des figures 1 et 2 peut former directement un organe à piloter, par exemple un bras de robot.

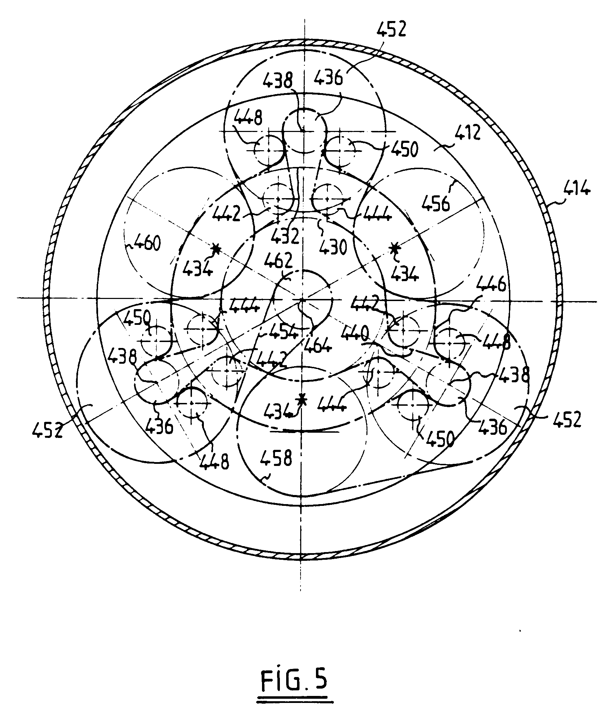

On se réfère maintenant à la figure 5 qui montre un autre dispositif de transformation de mouvement propre à constituer un réducteur bi-différentiel.

Le dispositif de la figure 5 comprend un premier étage comportant deux poulies coaxiales 462 et 432. La poulie 462 de plus petit diamètre est couplée à un axe 464 (non représenté) qui constitue l'un des deux axes de rotation du dispositif. La poulie 432 est verrouillée en rotation sur le bâti 414 au moyen de trois organes de fixation 434.

Le dispositif comprend en outre un deuxième étage comprenant trois ensembles constitués chacun de deux poulies coaxiales 436 et 452 qui sont liées en rotation et montées à rotation libre sur un axe 438 parallèle aux axes des poulies 462 et 432. Les trois ensembles de poulies 436 et 452 sont répartis à égale distance et équiangulairement par rapport aux axes des poulies 462 et 432 du premier étage. Les axes 438 sont portés par un support mobile 412.

Le dispositif comprend un brin d'entraînement sans fin 446 qui assure la transmission entre la poulie 432 du premier étage et les trois poulies 436 du second étage. Deux galets de renvoi 448 et 450 sont montés à rotation libre sur des axes portés par le support mobile, à proximité immédiate de chacun des trois ensembles de poulies du second étage. Ceci est destiné à faciliter l'enroulement du brin 446 autour de la poulie 432 et autour des trois poulies 436. Ainsi, le brin 446 passe successivement autour d'une première poulie 436, autour d'une partie de la poulie 432, autour d'une deuxième poulie 436, autour d'une deuxième partie de la poulie 432, autour d'une troisième poulie 436 et autour d'une troisième partie de la poulie 432 avant de regagner la première poulie 436 précitée, le brin 446 étant à chaque fois guidé par trois paires de galets de renvoi 448 et 450.

Le brin 454 s'enroule successivement autour de la poulie 462, d'une des poulies 452, de la poulie de renvoi 460, d'une deuxième poulie 452, de la poulie de renvoi 456, d'une troisième poulie 452, de la poulie de renvoi 458, avant de regagner la poulie 462.

Le brin 454 est une courroie crantée double face et la poulie 462, de même que les trois poulies 452 du deuxième étage et les trois poulies de renvoi 456, 458 et 460 sont des pignons dentés dont la denture est adaptée au crantage de la courroie. Comme le montre la figure 5, les poulies de renvoi 456, 458, 460 ont un diamètre aussi grand que possible, de manière que l'espace compris entre une poulie de renvoi et une poulie 452 soit le plus faible possible. De cette manière, la longueur des parties tendues de la courroie 454, c'est-à-dire la longueur des parties de cette courroie qui ne sont pas enroulées sur une poulie, est réduite le plus possible. Ceci permet de réduire l'élasticité due à la courroie crantée puisque cette élasticité ne peut pas jouer sur les parties de cette courroie qui s'enroulent autour d'une poulie, que ce soit la poulie 462, les poulies 452 ou les poulies de renvoi 456, 458 et 460.

De façon correspondante au brin 446, un brin sans fin 440 assure la transmission de mouvement entre les poulies 436 (qui sont des poulies doubles) et la poulie 430 qui correspond au deuxième axe de rotation du dispositif. En fait, l'ensemble constitué par les poulies 430, 432 et 436 forme le deuxième dispositif différentiel qui coopère au dispositif différentiel de l'invention, ce dernier étant constitué, dans l'exemple, par l'ensemble des poulies 432, 436, 452 et 462.

L'enroulement du brin 440 autour de la poulie 430 et des trois poulies 436 s'effectue de façon sensiblement analogue à celui du brin 446 autour de la poulie 432 et des trois poulies 436. L'enroulement du brin 440 est facilité par des galets de renvoi 442 et 444.

Le dispositif de la figure 5 fonctionne de la façon suivante : lorsque la poulie 462 est entraînée en rotation par son axe 464 (axe rapide), l'ensemble constitué par les poulies 462, 436, 452 et 432 va entraîner en rotation le support mobile 412. Ceci correspond au cas particulier de l'invention dans lequel la vitesse d'un des organes du premier étage est nulle.

Le deuxième dispositif différentiel constitué par les poulies 430, 432 et 436, entraîné par le support mobile 412, va générer une rotation à basse vitesse sur la poulie 430. On obtient ainsi un réducteur à double étage différentiel.

Ceci suppose bien évidemment que le rapport de réduction de l'étage lent soit différent de l'infini.

Dans les différentes formes de réalisation de l'invention, on peut, comme déjà indiqué précédemment, utiliser, à la place des brins d'entraînement, des moyens de transmission constitués au moins en partie par des engrenages ou par des roues à friction. Par ailleurs, dans le cas où on utilise un deuxième dispositif différentiel pour former un dispositif du type bi-différentiel, ce deuxième dispositif peut adopter toutes les configurations connues.

## Revendications

1. Dispositif de transformation de mouvement, en particulier réducteur de vitesse, du type comprenant :

   - un premier étage comprenant deux poulies coaxiales (50, 60 ; 432,462) dont l'une au moins est mobile et couplée fonctionnellement à un axe (74 ; 464) engendrant un premier mouvement de rotation qui est rapide ;
   - un second étage comprenant au moins un ensemble de deux poulies (54 ; 436,452) liées en rotation et coopérant respectivement avec des moyens de transmission (52,64 ; 454,446), qui coopèrent avec les poulies du premier étage ; et
   - un support mobile (26 ; 412) qui supporte à rotation libre le(s) ensemble(s) de deux poulies du second étage, et dont le déplacement sur une trajectoire imposée engendre un second mouvement de rotation, qui est lent ;

- et dans lequel le premier et le second mouvement correspondent respectivement à un mouvement d'entrée et un mouvement de sortie, ou inversement ;

caractérisé en ce que les moyens de transmission (52,64 ; 454,446) possèdent respectivement un entraînement direct et un entraînement inversé de sorte que les deux poulies (50,60 ; 454,446) du premier étage se déplacent en rotation à des vitesses en sens opposés, dont l'une peut être nulle, et que ces deux poulies génèrent sur le support mobile (26 ; 412) des couples de rotation de même sens.

2. Dispositif selon la revendication 1, caractérisé en ce que les moyens de transmission sont des brins d'entraînement sans fin (52,64 ; 454,446) qui coopèrent chacun avec une poulie du premier étage et une poulie du (des) ensemble(s) de poulies du second étage et en ce que le premier mouvement de rotation et le second mouvement de rotation sont coaxiaux.

3. Dispositif selon la revendication 1, caractérisé en ce que l'un au moins des moyens de transmission est constitué par des engrenages ou des roues à friction, en ce que ce moyen de transmission coopère avec l'une des deux poulies du premier étage, et en ce que cet élément du premier étage est soit à denture ou à contact externe, soit à denture ou à contact interne.

4. Dispositif selon l'une des revendications 1 à 3, caractérisé en ce que le(s) ensemble(s) de poulies (54 ; 436,452) du second étage décrit une trajectoire circulaire centrée sur l'axe de rotation dudit support mobile.

5. Dispositif selon l'une des revendications 1 à 4, caractérisé en ce qu'il constitue un premier dispositif différentiel comportant deux poulies (432,462) de premier étage, au moins l'ensemble de poulies (436, 452) de second étage et le support mobile (412) portant le(s) ensemble(s) de poulies, et en ce que ce premier dispositif différentiel est relié à un second dispositif différentiel comportant au moins un organe solaire, un porte-satellite(s) et au moins un satellite, pour constituer un réducteur bi-différentiel.

6. Dispositif selon la revendication 5, caractérisé en ce que l'une (432) des poulies du premier étage du premier dispositif différentiel est bloquée en rotation et est commune avec un organe, par exemple un organe solaire, du second dispositif différentiel, en ce que le support mobile (412) du premier dispositif différentiel est commun avec le porte-satellite(s) du second dispositif différentiel, en ce que le(s) ensemble(s) de poulies du second étage du premier dispositif différentiel est (sont) commun(s) avec le(s) satellite(s) du second dispositif différentiel, et en ce que l'autre poulie (462) du premier étage du premier dispositif différentiel constitue ledit premier mouvement de rotation rapide, tandis qu'un organe non bloqué (430), par exemple un autre organe solaire, du second dispositif différentiel constitue ledit second mouvement de rotation lent.

7. Dispositif de transformation de mouvement, en particulier réducteur de vitesse, du type comprenant :

- un premier étage comprenant deux organes mobiles (130, 132), constitués par des brins d'entraînement sans fin, dont l'un au moins est couplé fonctionnellement à un axe (116) engendrant un premier mouvement qui est un mouvement de rotation et qui est rapide ;
- un second étage comprenant au moins un ensemble de deux poulies (134,152) liées en rotation et coopérant respectivement avec les deux brins d'entraînement sans fin (130, 132) ;et
- un support mobile (138) qui supporte à rotation libre le(s) ensemble(s) de deux poulies du second étage, et dont le déplacement sur une trajectoire imposée engendre un second mouvement qui est un mouvement lent et linéaire.
- et dans lequel le premier et le second mouvement correspondent respectivement à un mouvement d'entrée et un mouvement de sortie, ou inversement ;

caractérisé en ce que les brins d'entraînement sans fin (130,132) constituant les organes mobiles du premier étage possèdent respectivement un entraînement direct et un entraînement inversé de sorte que ces deux organes se déplacent à des vitesses en sens opposés, dont l'une peut être nulle, et que ces deux organes génèrent sur le support mobile (138) des efforts de même sens.

8. Dispositif selon la revendication 7, caractérisé en ce que les deux brins d'entraînement sans fin (130,132) ont des portions parallèles et coplanaires et en ce que l'un au moins des brins est couplé audit axe (116) engendrant le premier mouvement et en ce que le second mouvement est un mouvement à course limitée sur une trajectoire rectiligne.

9. Dispositif selon l'une des revendications 2, et 4 à 8, caractérisé en ce que les brins d'entraînement sans fin (52,64 ; 130,132 ; 446,454) sont constitués par des courroies crantées.

**Claims**

1. Speed transforming mechanism, in particular speed reducer, of the type comprising:

   - a first stage comprising two coaxial pulleys (50, 60; 432, 462), of which at least one is mobile and coupled functionally to a shaft (74; 464) generating a first rotary motion, which is fast;
   - a second stage, comprising at least one set of two pulleys (54; 436, 452) connected in rotation and cooperating respectively with transmission means (52, 64; 454, 446), which cooperate with the pulleys of the first stage; and
   - a movable support (26; 412), which supports with free rotation the set or sets of two pulleys of the second stage, and whose displacement along an imposed trajectory generates a second rotary motion, which is slow;
   - and in which the first and the second motion correspond respectively to an input motion and an output motion, or vice versa;

   characterised in that the transmission means (52, 64; 454, 446) have respectively a direct drive and an inverse drive, so that the two pulleys (50, 60; 454, 446) of the first stage move in rotation at velocities with opposite directions, one of which may be zero, and in that these two pulleys generate on the movable support (26; 412) torques with the same direction.

2. Mechanism according to claim 1, characterised in that the transmission means are endless drive belts (52, 64; 454, 446), each cooperating with a pulley of the first stage and a pulley of the set or sets of pulleys of the second stage, and in that the first rotary motion and the second rotary motion are coaxial.

3. Mechanism according to claim 1, characterised in that at least one of the transmission means is formed of gears or friction wheels, in that this transmission means cooperates with one of the two pulleys of the first stage, and in that this element of the first stage has either external teeth or contact or internal teeth or contact.

4. Mechanism according to one of claims 1 to 3, characterised in that the set or sets of pulleys (54; 436, 452) of the second stage describes or describe a circular path centred on the axis of rotation of said movable support.

5. Mechanism according to one of claims 1 to 4, characterised in that it forms a first differential device comprising two first-stage pulleys (432, 462), at least the second-stage set of pulleys (436, 452), and the movable support (412) carrying the set or sets of pulleys, and in that the first differential device is connected to a second differential device comprising at least one sun gear, a planet carrier and at least one planet gear to form a bi-differential reducer.

6. Mechanism according to claim 5, characterised in that one (432) of the pulleys of the first stage of the first differential device is non-rotatable and is common with an element, e.g. a sun gear, of the second-differential device, in that the movable support (412) of the first differential device is common with the planet carrier(s) of the second differential device, and in that the set or sets of pulleys of the second stage of the first differential device is (are) common with the planet gear(s) of the second differential device, and in that the other pulley (462) of the first stage of the first differential device forms the first rapid rotary motion, whereas an element (430) which is not locked, e.g. another sun gear, of the second differential device forms the second, slow rotary motion.

7. Speed transforming mechanism, in particular speed reducer, of the type comprising:

   - a first stage comprising two movable elements (130, 132), formed by endless drive belts, of which at least one is coupled functionally to a shaft (116) generating a first motion, which is a fast, rotary motion;
   - a second stage, comprising at least one set of two pulleys ( 134, 152) connected in rotation and cooperating respectively with the two endless drive belts (130, 132); and
   - a movable support (138), which supports with free rotation the set or sets of two pulleys of the second stage, and whose displacement along an imposed trajectory generates a second motion, which is a slow, linear motion,

- and in which the first and the second motion correspond respectively to an input motion and an output motion, or vice versa;

characterised in that the endless drive belts (130, 132) forming the moving elements of the first stage respectively have a direct drive and an inverse drive, so that these two elements move at velocities with opposite directions, one of which may be zero, and in that these two elements generate on the movable support (138) forces with the same direction.

8. Mechanism according to claim 7, characterised in that the two endless drive belts (130, 132) have portions which are parallel and coplanar, and in that at least one of the belts is coupled to the shaft (116) which generates the first motion, and in that the second motion is a motion with a limited stroke.

9. Mechanism according to one of claims 2 and 4 to 8, characterised in that the endless drive belts (52, 64; 130, 132; 446, 454) are formed by synchronous belts.

**Patentansprüche**

1. Vorrichtung zur Bewegungsumwandlung, insbesondere Untersetzungsgetriebe, bestehend aus:
   - einer ersten Stufe mit zwei koaxialen Riemenscheiben (50, 60; 432, 462) von denen wenigstens eine getrieblich mit einer welle gekoppelt ist, welche eine hohe Drehgeschwindigkeit aufweist,
   - einer zweiten Stufe mit wenigstens einer Riemenscheibengruppe von zwei Riemenscheiben ( 54; 436, 452), die drehfest miteinander verbunden sind und jeweils mit Übertragungsmitteln (52, 64; 454,446) zusammenwirken, welche mit den Riemenscheiben der ersten Stufe zusammenwirken, und
   - aus einem beweglichen Träger (26; 412), auf dem frei drehbar die aus zwei Riemenscheiben bestehende Riemenscheibengruppe bzw. -gruppen der zweiten Stufe gelagert sind und dessen Verstellung entlang einer vorgegebenen eine zweite langsame Drehbewegung darstellt,
   - und wobei die erste und die zweite Drehbewegung jeweils einer Eingangsbewegung und einer Ausgangsbewegung entspricht oder umgekehrt;
   dadurch gekennzeichnet,
   daß von den Übertragungsmitteln (52, 64; 454, 446) ein eines direkt und das andere umgekehrt angetrieben ist derart, daß die beiden Riemenscheiben (50, 60; 454, 446) der ersten Stufe sich gegenläufig mit Geschwindigkeiten drehen, von denen eine Null sein kann, und daß diese beiden Riemenscheiben auf den Träger gleichgerichtete Drehmomente ausüben.

2. Vorrichtung nach Anspruch 1, dadurch gekennzeichnet, daß die Übertragungsmittel aus endlosen Antriebsriemen (52, 64; 454,446) bestehen, die jeweils mit einer Riemenscheibe der ersten Stufe und mit einer Riemenscheibe der Riemenscheibengruppe bzw. -gruppen der zweiten Stufe zusammenwirken, und daß die erste Drehbewegung und die zweite Drehbewegung zueinander koaxial sind.

3. Vorrichtung nach Anspruch 1, dadurch gekennzeichnet, daß wenigstens eines der Übertragungsmittel aus Eingriffmitteln oder aus Reibrädern besteht, daß dieses Übertragungsmittel mit einer der beiden Riemenscheiben der ersten Stufe zusammenwirkt und daß dieses Element der ersten Stufe entweder eine Verzahnung oder eine externe Verbindung bzw. entweder eine Verzahnung oder eine interne Verbindung ist.

4. Vorrichtung nach einem der Ansprüche 1 bis 3, dadurch gekennzeichnet, daß die Riemenscheibengruppe bzw. -gruppen (54; 436,452) der zweiten Stufe eine Kreisbahn um die Drehachse des beweglichen Trägers beschreiben.

5. Vorrichtung nach einem der Ansprüche 1 bis 4, dadurch gekennzeichnet, daß zur Bildung eines Zweifach-Planetengetriebes ein erstes Planetengetriebe vorgesehen ist, das zwei Riemenscheiben (432, 462) der ersten Stufe, wenigstens die Riemenscheibengruppe (436, 452) der zweiten Stufe und den Träger umfaßt, der die Riemenscheibengruppe trägt, und daß dieses erste Planetengetriebe mit einem zweiten Planetengetriebe in Verbindung steht, welches wenigstens ein Sonnenrad, einen Planetenradträger und ein Planetenrad aufweist.

6. Vorrichtung nach Anspruch 5, dadurch gekennzeichnet, daß die eine Riemenscheibe (432) der ersten Stufe des ersten Planetengetriebes gegen Drehung gesperrt ist und zugleich ein Teil, z.B. ein Sonnenrad, des zweiten Planetengetriebes bildet,
daß der bewegliche Träger des ersten Planetengetriebes ein gemeinsames Teil bildet mit dem Planetenradträger des zweiten Planetengetriebes,

daß die Riemenscheibengruppe bzw. -gruppen der zweiten Stufe des ersten Planetengetriebes jeweils ein gemeinsames Teil bilden mit dem Planetenrad bzw. den Planetenrädern des zweiten Planetengetriebes, und

daß die andere Riemenscheibe der ersten Stufe des ersten Planetengetriebes die genannte erste schnelle Drehbewegung aufweist, während ein nicht gesperrtes Organ (430), z.B. ein anderes Sonnenrad, des zweiten Planetengetriebes die genannte zweite langsame Drehbewegung aufweist.

7.  Vorrichtung zur Bewegungsumwandlung, insbesondere Untersetzungsgetriebe, bestehend aus:

- einer ersten Stufe mit zwei beweglichen Organen, die von endlosen Antriebsriemen gebildet sind, von denen wenigstens einer getrieblich mit einer Welle in Verbindung steht, die eine erste schnelle Drehbewegung aufweist,
- einer zweiten Stufe mit wenigstens einer aus zwei Riemenscheiben bestehenden Riemenscheibengruppe, die mit den beiden endlosen Antriebsriemen in Drehverbindung stehen und zusammenwirken, und
- einem beweglichen Träger (138), auf dem die beiden Riemenscheiben der Riemenscheibengruppe der zweiten Stufe frei drehbar gelagert sind und dessen Verschiebung auf einer vorgegebenen Bahn eine zweite Bewegung ergibt, die langsam und linear ist,
- und bei welcher die erste und die zweite Bewegung jeweils einer Eingangs- bzw. einer Ausgangsbewegung entsprechen oder umgekehrt,

dadurch gekennzeichnet,

daß von den endlosen Antriebsriemen (130, 132), welche die beweglichen Organe der ersten Stufe bilden, einer direkt und der andere umgekehrt angetrieben wird, derart, daß sich die beiden Organe gegenläufig mit Geschwindigkeiten bewegen, von denen die eine Null sein kann, und daß die beiden Organe auf den beweglichen Träger gleichgerichtete Kräfte ausüben.

8.  Vorrichtung nach Anspruch 7, dadurch gekennzeichnet, daß die beiden endlosen Antriebsriemen (130, 132) parallele und koplanare Abschnitte aufweisen und daß wenigstens einer der Riemen mit der Welle (116) gekoppelt ist, welche die erste Bewegung aufweist, und daß die zweite Bewegung über eine begrenzte Strecke auf einer geradlinigen Bahn verläuft.

9.  Vorrichtung nach einem der Ansprüche 2 oder 4 bis 8, dadurch gekennzeichnet, daß die endlosen Antriebsriemen (52, 64; 130, 132; 446, 454) aus Zahnriemen bestehen.

EP 0 270 430 B1

FIG.1

FIG.2

12

FIG.4

FIG.3

FIG. 5